(19) Europäisches Patentamt
European Patent Office
Office européen des brevets

(11) **EP 4 624 882 A1**

(12) **EUROPEAN PATENT APPLICATION**

(43) Date of publication:
**01.10.2025 Bulletin 2025/40**

(21) Application number: **24166516.5**

(22) Date of filing: **26.03.2024**

(51) International Patent Classification (IPC):
**G01K 1/02** (2021.01)      **G01K 3/00** (2006.01)
**G01K 7/42** (2006.01)      **H01M 10/48** (2006.01)
**H01M 10/651** (2014.01)

(52) Cooperative Patent Classification (CPC):
**G01K 3/005; G01K 1/026; G01K 7/42;
H01M 10/425; H01M 10/482; H01M 10/486**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Instagrid GmbH
71636 Ludwigsburg (DE)**

(72) Inventor: **Gutknecht, Philipp
71636 Ludwigsburg (DE)**

(74) Representative: **Eisenführ Speiser
Patentanwälte Rechtsanwälte PartGmbB
Am Kaffee-Quartier 3
28217 Bremen (DE)**

(54) **TEMPERATURE MONITORING FOR ELECTRICAL UNITS**

(57)      The present teachings relate to a temperature monitoring system for an electrical unit, which temperature monitoring system comprises: a first monitored portion and a first temperature sensor disposed to measure a first temperature of the first monitored portion; a second monitored portion and a second temperature sensor disposed to measure a second temperature of the second monitored portion; an evaluation unit operable to determine a temperature reserve value from the first temperature and the second temperature.

The present teachings further relate to a method for operating a temperature monitoring system for an electrical unit, and software product.

Fig. 1

**Description**

The present teachings relate generally to a temperature monitoring system for an electrical unit, related methods, and software products. More specifically, the present teachings relate to overtemperature monitoring systems, methods and software products, especially for electrical units used for power applications.

Electrical units, such as for example power packs providing off-grid electrical energy to different loads are well known. Electrical units usually comprise multiple temperature sensitive devices. Temperature sensitive devices may be electronic devices, such as (silicon-based) semiconductor devices or for example different kinds of electrical energy storage cells or sensors. For these temperature sensitive devices, the temperature should not exceed a specific maximum threshold temperature to avoid damaging and loss of their functionality.

In order to avoid that those temperature sensitive devices are exposed to temperatures outside of their acceptable threshold temperature, an automatic switch-off of the electrical unit is often implemented. In case one of the temperature sensitive devices reaches a predefined temperature value at the threshold temperature, the electrical unit is designed to switch off.

However, a sudden switch-off of the electrical unit may have some drawbacks. For example, in case of a power pack used as a mobile energy supply to an appliance (e.g., a tool), a sudden switch-off of the power pack results in a switch-off of the powered appliance as well. Such appliances can be any kind of tool (e.g., used on a construction site), or also lighting equipment or emergency equipment, like for example pumps. For some applications, a sudden stop may lead to severe safety issues. Further, convenient use of the electrical unit is limited when a user is surprised by the abrupt switch-off.

At least some of the above problems will be shown solved by the subject matter of the herein appended independent claims. Certain additional improvements will be appreciated from the dependent claims and the following specification.

An object of the present disclosure is therefore to provide a temperature monitoring system, especially an overtemperature monitoring system, for an electrical unit and a method for operating the system, by means of which a safe and practical use of an electrical unit can be achieved.

A temperature monitoring system pursuant to a perspective of the present teachings comprises:

- a first monitored portion and a first temperature sensor disposed to measure a first temperature of the first monitored portion;
- a second monitored portion and a second temperature sensor disposed to measure a second temperature of the second monitored portion;

- an evaluation unit operable (e.g., configured to) determine a temperature reserve value from the first temperature and the second temperature.

In some preferred embodiments, the temperature monitoring system may be an overtemperature monitoring system. Generally, for electrical units (e.g., inverters, battery packs, distributors, switches, their likes, or their combinations) handling electrical power, avoidance of overheating may be a more frequent problem. Although it can also be contemplated that for some certain units such as those containing electrical energy storage cells, avoidance of low temperatures may be desired, instead or in combination with an overtemperature monitoring capability. It shall be appreciated that the present teachings are especially relevant to portable units (e.g., units which can be moved around by a single person or by two persons). As compared to stationary units, portable electrical units may be used in situation which may vary vastly. For example, a portable unit may be used in open daylight on a warm sunny day which contributes to the unit getting warm faster. Alternatively, the same unit may be used in enclosed spaces with not enough free circulation thus preventing heat produced by the unit during operation from being dissipated. In other scenarios, the unit may be used in cooler conditions which assist in keeping the temperature well below the high limit. Portable units can thus benefit from having a stand-alone yet simple to observe and understand temperature monitoring system. This can help a user in operating the unit in a manner which maximizes the availability of the unit while keeping the unit within safe limits.

For brevity, in the discussions henceforth, the term "overtemperature monitoring system" will be used without losing generality where applicable to an undertemperature monitoring system, which may also be realizable with at least some of the similar benefits.

According to certain non-limiting aspects, the temperature monitoring system is enclosed to the electrical unit. For example, the temperature monitoring system is part of the electrical unit. The temperature monitoring system can for example be included in the housing of the electrical unit. According to further non-limiting aspects, the evaluation unit may be powered by a power supply integrated in the electrical unit. According to further non-limiting aspects, the temperature system can be connected to a control unit (e.g., a processor) of the electrical unit.

The first monitored portion may comprise multiple first temperature sensitive devices and the second monitored portion in may comprise multiple second temperature sensitive devices. The first temperature sensitive devices may or may not be of the same type as the second temperature sensitive devices.

According to certain non-limiting aspects, at least a first temperature of a first portion of the electrical unit, and at least a second temperature of a second portion of the electrical unit are monitored to determine the temperature reserve value by means of the evaluation unit. The evaluation unit may be the control unit of the electrical unit, or it may be a separate component. The evaluation unit may have a communicative coupling to the control unit. It shall be appreciated that by condensing multiple measurement data points to an actionable parameter/output (e.g., the temperature reserve value) which is more relatable to the user, the user can be enabled to take actions to prevent an overtemperature event from occurring. Additionally, prevention of at least some overtemperature related automatic tripping events of the electrical unit may even improve lifetime of the electrical unit by reducing stress on the internal components. Moreover, the proposed teachings can make the automatic temperature protection as a backup protection. The benefit of providing this actionable output can be even more appreciated when there are several parts inside the electrical unit which may or may not heat up in a coordinated or uniform manner. For example, it may be desirable to monitor each or several of the electrical energy storage cells in the electrical unit. This measurement data may not be directly usable or actionable for the user. Thus, pursuant to the teachings the measurement data are distilled to a state (e.g., the temperature reserve value) which the user can act based upon.

The temperature reserve value may indicate how much temperature increase is still possible before the electrical unit will trip or automatically switch off to prevent further temperature rise. A large temperature reserve value may be indicative of that the electrical unit is still farther away from a trip event due to overtemperature. In contrast a small temperature reserve value may be indicative of that the electrical unit is heated up and that switch-off the electrical unit is imminent. The temperature reserve value may be continuously or intermittently updated to keep the user informed about the recent state of the electrical unit.

The provision of the temperature reserve value offers the possibility for the user of the electrical unit to track the temperature behavior and to know whether the temperature situation of the electrical unit at a given time is critical or not. The overtemperature monitoring system can allow that the user has still time to react before a temperature safety trip occurs. For example, the user may be enabled to take specific measures to prevent overtemperature trip event or to improve the temperature reserve value for continued work. Such measures may include all or some, but not limited to: move the electrical unit to a cooler location such as shade or in better air circulation, reduce electrical consumers or load which is connected to the electrical unit, reduce charging or discharging current of the unit, take a work break in a more planned manner so as to prevent sudden disruption caused by an unforeseen trip event, or apply active cooling at or around the unit. Thus, the temperature monitoring system can enable a safe and continued operation (e.g., reduced disruption) of the electrical unit by providing means to let the user manage the electrical unit as per requirements at hand.

According to certain non-limiting aspects, the first monitored portion comprises at least one electrical energy storage cell. For example, the first monitored portion may comprise multiple electrical storage cells (e.g., 1 to N). In some non-limiting cases, the first temperature may be a set of temperatures $T_{1,1}$ to $T_{1,N}$ measured at different locations, (e.g., of several or each electrical storage cell). Therefore, first set of temperature sensors (or first temperature sensors) may be provided, each for measuring one or more electrical energy storage cells. As at high temperatures, above a certain temperature, the electrical energy storage cells may start degrading faster, overheating of the cells should be prevented. For Lithium-ion rechargeable battery cells, for example, the electrolyte starts to decompose at high temperatures. For electrical units such as power packs comprising at least one electrical energy storage cell, an overtemperature monitoring system according to the present teachings can be particularly beneficial as such electrical units (e.g., those containing Li-ion batteries) may experience more frequent overtemperature events.

Electrical storage cells may be any of: electrical battery (e.g., lithium-ion battery), capacitors (e.g., supercapacitors), any other rechargeable cells or battery, or their combinations. The first monitored portion may comprise between 20 and 350 electrical storage cells. Electrical storage cells can be aggregated in different battery modules, for example in 4 to 50 battery modules, each battery module comprising between 3 and 15 electrical storage cells.

During operation, the energy storage cells may have a charging mode during which electrical energy is transferred to the cells to be stored therein for later use. The energy storage cells may have a discharge mode during which the stored energy is utilized for certain use, e.g., to power a load such as an electrical appliance. The specification of electrical energy storage cells may provide a certain temperature range for a given performance and/or lifetime of the cell. For example, there may be a temperature range for charging (e.g., 0°C to +50°C) of the energy storage cells, and there may be a temperature range for discharging (e.g., -20°C to +75°C). It is also possible that the ranges are similar or same.

Alternatively, or in addition, certain other parts of the electrical unit may need to be prevented from reaching overtemperatures. Thus, the electrical unit comprises a second monitored portion which is different from the first monitored portion in terms of location and/or type of component. The second monitored portion is monitored with at least one second temperature sensor disposed to measure a second temperature. According to an aspect, the second monitored portion may comprise at least another component, e.g., at least one substrate (e.g., a printed circuit board ("PCB")). The second monitored portion may even comprise multiple substrates or PCBs of same or different types. At least one substrate may comprise at least one second temperature sensor. Each PCB may comprise more than one temperature sensor measuring temperatures at different locations, or each PCB may comprise one temperature sensor each. Thus, a second set of temperature sensors (or second temperature sensors) may be provided to monitor the second monitored portion (e.g., one or more PCBs). Any of the PCBs may be mounted with (silicon-based) semiconductor devices, which can be very sensitive to overtemperature. As an example, the specification of such PCBs often specifies a temperature range between -20°C and +90°C. Beyond this temperature, the electronic components may get damaged, metallic traces or layers of the PCB may get defective, the PCB itself may warp, the solder may melt and create (e.g., by flowing) unintended short- and/or open- circuits, or a combination of any of these may occur. Hence, it may be undesirable to let the unit get overheated to prevent it from getting thermally damaged.

The electrical unit may be in the form of a portable power pack for supplying different loads with electrical power. The electrical unit may provide an AC power at the output and may also be chargeable via an input when connected to AC power. As such, the electrical unit may comprise one or more electrical sockets for operating power tools on constructions sites, for lighting devices, for emergency appliances (e.g., pumps) or any kind of mobile device.

The electrical unit may be a power pack, comprising at least one and preferably multiple electrical energy storage cells. In particular, the power pack may comprise multiple PCBs. At least two of the electrical energy storage cells may be connected in series via a PCB. The PCB may comprise current sensors, voltage sensors, temperature sensors, switching elements and/or conducting paths. The at least one PCB can be part of a battery management system (BMS) protecting the battery from undesired operation and optimizing the control of a charging and discharging process of the electrical energy storage cells. An electrical unit comprising an overtemperature monitoring system as described herein can therefore be especially advantageous as the unit may be used by different users, some more experienced than others. Pursuant to the teachings, a user can be informed about the temperature reserve or headroom such that they may adapt the operation and reduce the risk of a sudden switch-off. The teachings therefore also relate to a power pack with overtemperature monitoring as described herein.

In some non-limiting embodiments, the temperature reserve value may be used by the evaluation unit or any other processor operatively coupled to the electrical unit to control an operation mode of the electrical unit. For example, if the electrical unit is running hot during charging (e.g., temperature reserve value decreasing beyond a certain value), or even if a rate of change (e.g., decrease) of temperature reserve value is going beyond a given value, the evaluation unit or processor may adapt the charging mode accordingly (e.g., to slow down or stabilize the reduction in the temperature reserve). This can be helpful even if a user is not around, and to allow the user to get to use the electrical unit with a good temperature reserve value.

In a further non-limiting aspect, the evaluation unit or any other processor operatively coupled to the electrical unit to control an operation mode may use the temperature reserve value to adapt the settings of a discharging operation. An example of discharging (or discharge-) mode is when an appliance is being supplied electrical power by the electrical unit (e.g., by being coupled to the AC output of the electrical unit), and the electrical energy storage cells of the electrical unit are being discharged by supplying electrical power to the appliance. According to some non-limiting embodiments, one or more parameters of the discharging operation (e.g., load current or power) may be controlled (e.g., via the evaluation unit) dependent upon the temperature reserve value. In other words, the load current supplied to the appliance may be one of the parameters which is controlled to influence (e.g., limit, maintain or improve) the temperature reserve value. For example, when monitoring overtemperature, reducing the load current may reduce the temperature of one or more portions (e.g., the PCB and/or the energy storage cells) of the electrical unit. So, by limiting (e.g., reducing) load current (e.g., current consumption), further heating of PCBs and/or energy storage cells may be prevented, leading to a desired (e.g., stabilized, or improved) temperature reserve value. In some non-limiting embodiments, reducing the load current in a gradual manner (e.g., with a given rate, or in stepwise manner), may be used, for achieving a desired (e.g., stabilized, or improved) temperature reserve value.

In some non-limiting embodiments, control of one or more parameters of the discharging operation (e.g., load current or power) may involve control via the appliance. For example, the appliance may be communicatively coupled (e.g., wired and/or wirelessly) with the electrical unit by any suitable communication means. The communication means may be any one or more of connections such as: USB, power-line-communication (PCL), Bluetooth, WiFi, ethernet, or any other standard or custom protocol or bus. In response to the temperature reserve value, the appliance may adjust its load (e.g., current or power) on the electrical unit such that a desired (e.g., stabilized, or improved) temperature reserve value is achieved. Thus, in some non-limiting embodiments, the electrical unit and the appliance may act in a closed-loop control manner to achieve a desired (e.g., stabilized, or improved) temperature reserve value.

In addition, or alternatively, one or more parameters of the discharging operation (e.g., load current or power) may be adjusted in dependence to the temperature reserve value in a stepwise manner (e.g., multi-level hysteretic manner). For example, it may be evaluated (e.g., via the evaluation unit) continuously or intermittently (e.g., in regular or irregular intervals), whether the temperature reserve value is larger than a first predetermined temperature reserve value. While the temperature reserve value is higher than the first predetermined threshold value, then the load current may be set (e.g., by the evaluation unit and/or the appliance) to a first preselected load current value. If the temperature reserve value is lower than the first predetermined threshold value, then it may be determined whether the temperature reserve value is larger than a second predetermined value. The second predetermined value being smaller than the first predetermined temperature reserve value. While the temperature reserve value is higher than the second predetermined threshold value, then the load current is to be set (e.g., by evaluation unit and/or the appliance) to a second preselected load current value. The second preselected load current value being lower than the first preselected load current value. Further, optionally, if the temperature reserve value is lower than the second predetermined threshold value, then it may be determined whether the temperature reserve value is larger than a third predetermined value. This process may be continued, until either the temperature reserve value is larger than a predetermined temperature reserve value (e.g., a desired temperature reserve value is reached) or until the load current is set to a preselected minimum value. It shall be appreciated that it a desired temperature reserve value may be reached in any number of steps, e.g., a single step, two steps, or more than two steps, whichever causes a desired temperature reserve value to be reached.

In some non-limiting embodiments, the evaluation unit may be communicatively coupled via a communication interface to the appliance, so that the evaluation unit may be operable to at least partially control the current and/or power consumption of the appliance (e.g., dependent on the temperature reserve value as discussed herein, e.g., to achieve a desired temperature reserve value). Additionally, or alternatively, a control unit of the appliance may be communicatively coupled to the evaluation unit and operable to at least partially control the current and/or power consumption of the appliance.

The appliance coupled to the AC output of the electrical unit may have any suitable means for adjusting its parameters (e.g., power, or current consumption). In some non-limiting embodiments, the appliance may have a communication interface operable to receive data according to which said parameters (e.g., power, or current consumption) may be adjusted (e.g., controlled).

In a non-limiting example, the appliance may be a charger (e.g., onboard charger) of an electric vehicle.

In some non-limiting embodiments, the evaluation unit is configured to compare the first temperature to a first monitoring criterion and the second temperature to a second monitoring criterion. The first monitoring criterion and the second monitoring criterion can be different. A monitoring criterion may be a first (e.g., maximum) threshold value (e.g., a voltage and/or a current value obtained via the first temperature sensor) for the first monitored portion, and a second (e.g., maximum) threshold value (e.g., a voltage and/or a current value obtained via the second temperature sensor) for the second monitored portion. This reflects that first monitored portion and second monitored portion may comprise different kinds of types or classes of devices, each having a different threshold temperature (e.g., maximum temperature).

In some non-limiting embodiments, the evaluation unit may determine the temperature reserve value (R) according to following formula:

$$R = \min(a,b)$$

Wherein:

$$a = \quad x\,(T_{1,max} - T_{1,highest})$$

$$b = \quad y\,(T_{2,max} - T_{2,highest})$$

$T_{1,max}$ = the maximum threshold temperature of the first monitored portion
$T_{1,highest}$ = the highest measured first temperature of the first monitored portion
$T_{2,max}$ = the maximum threshold temperature of the second monitored portion
$T_{2,highest}$ = the highest measured second temperature of the second monitored portion
$x$, $y$ = weighting factors.

$T_{1,highest}$ may also be expressed as:

$$T_{1,highest} = \max(T_{1,1},\ T_{1,2},\ ...,\ T_{1,N})$$

Similarly, $T_{2,highest}$ may also be expressed as:

$$T_{2,highest} = \max(T_{2,1},\ T_{2,2},\ ...,\ T_{2,M})$$

where, N is the number of temperature sensors disposed to monitor the first monitored portion; M is the number of temperature sensors disposed to monitor the second monitored portion. N and M may be equal or they may be unequal.

Thus, $T_{1,highest}$ may the temperature value of that temperature sensor which is providing the highest temperature reading in the first monitored portion. Similarly, $T_{2,highest}$ may be the temperature value of that temperature sensor which is providing the highest temperature reading in the second monitored portion.

It shall be appreciated that any of the above formulas can be implemented as a part of herein disclosed methods, e.g., as one or more method steps, e.g., as an algorithm which is executed by the evaluation unit and/or another processor.

The temperature reserve value R may be selected from the values a and b, whichever is smaller. The value a represents a difference between the first (e.g., maximum) threshold temperature and the highest measured first temperature in the first monitored portion (e.g., that related to one or more electrical energy storage cells). The value b represents a difference between the second (e.g., maximum) threshold temperature and the highest measured second temperature in the second monitored portion (e.g., that related to one or more substrates such as PCB).

In some non-limiting embodiments, $T_{1,max}$ and $T_{2,max}$ may be determined by the specifications or requirements of the first monitored portion and the second monitored portion, respectively. Referring to the above discussed examples, in case of an electrical energy storage cell, $T_{1,max}$ may be +50°C in case of charging, but +75°C in case of discharging of the energy storage cell. For a PCB, $T_{2,max}$ may, e.g., be +90°C. The values mentioned herein are to be considered merely illustrative and non-limiting to the scope and generality of the present teachings.

As discussed above, $T_{1,highest}$ and $T_{2,highest}$ may be selected among the measured temperatures of the first monitored portion and the second monitored portion, respectively. For example, if the first monitored portion comprises multiple temperature sensitive devices, e.g., electrical energy storage cells, these devices may have different first temperatures during operation. Moreover, the temperature distribution may change over time. For example, certain parts which were initially cooler relative to the other parts of the first monitored portion, may later become warmer to those other parts. The present teachings thus allow capturing such dynamic shifts in operating scenario, which has equivalent bearing on the safety and/or availability of the electrical unit. For the determination of the temperature reserve value, at any given time, the dominant value at that time (e.g., the highest first temperature value) is selected from the multiple first temperature values. In particular, the latest, current value of $T_{1,highest}$ and/or $T_{2,highest}$ is used to determine the temperature reserve value. It shall be appreciated that either or all such values may not need to be continuous, some or all may even be intermittently measured, for example, every one or more milliseconds, or even in some cases once every second, or even once every few seconds. The measurement frequency may depend on the criticality of the component(s) being monitored and/or the thermal inertia which any specific component being monitored has. Thus, to specify a measurement frequency of any temperature sensors herein disclosed is not essential to the scope or generality of the present teachings.

The values, x and y are weighting factors. In some non-limiting embodiments, x and y each or any one of these may have a value of 1. Depending on the thermal management of the electrical unit, x and/or y can be numerical weighted to take into account different thermal masses or behavior of the different monitored portions. For example, x and y may be weighted differently to account for different priority or sensitivity of one monitored portion over the other. It shall be appreciated that in some embodiments, even specific temperature sensors within any one or more monitored portions may be given weighting factors. For example, $T_{1,highest}$ may be $\max(m.T_{1,1}, n.T_{1,2}, ..., z.T_{1,N})$. Here, m, n, ..., z are weighting factors which may assign different sensitivity to one or more of the sensors. Alternatively, or in addition, the second portion from which $T_{2,highest}$ is determined may also assign similar or different weighting factors to one or more sensors disposed to monitor the second portion. Any of the weighting factors discussed herein may be fractions or whole numbers.

As discussed above, the first monitored portion may comprise or it may be at least one electrical energy storage cell and $T_{1,max}$ can be set variably, e.g., depending on the mode of operation of the at least one electrical energy storage cell and/or electrical unit. The evaluation unit may be configured to determine whether the at least one electrical energy storage cell is in charging mode or in discharging mode and to set $T_{1,max}$ accordingly. With regard to the non-limiting examples above, in charging mode $T_{1,max}$ may correspond e.g., to +50°C and in discharging mode $T_{1,max}$ may correspond e.g., to +75°C.

In another non-limiting embodiment, the overtemperature monitoring system further comprises a human machine interface (HMI) unit. The HMI unit may be configured to output (e.g., display) the temperature reserve value. The HMI unit may be configured to communicate the temperature reserve value visually and/or audibly. The HMI unit may be a part of the electrical unit. Alternatively, or in addition, the HMI unit may be part of another device, for example of a mobile device, such as a smart phone. The temperature reserve value may be transmitted to another device, e.g., wirelessly.

The HMI unit may comprise a display unit. A display unit may be used to display the temperature reserve. This can provide an easy access for a user to the temperature reserve value.

In some non-limiting embodiments, the HMI unit comprises at least one light emitting component, capable of displaying the temperature reserve value. The light emitting component may be a stand-alone display element, such as a light emitting diode (LED) or lamp, and/or it may be part of a back-lit display. For example, the light emitting component may comprise a series (e.g., row, column, array, or such) of LEDs which are lighted in sequence dependent upon the temperature reserve value. Alternatively, or in combination, the temperature reserve value may be displayed by converting it to a color scale value. For example, the light emitting component may indicate in green color that the temperature reserve value is large. Alternatively, or in addition, the light emitting component may adjust the number of lighted components dependent on the temperature reserve value. When the temperature reserve value is running low, then the light emitting component may adjust the color (e.g., red) and/or the number of lighted components to indicate that the temperature reserve value is close to end. Between the extreme cases of the largest temperature reserve value and the lowest temperature reserve value, the light emitting component may continuously or in steps be configured to change the displayed color and/or the number of lighted components according to the recent temperature reserve value. For example, when the temperature reserve value is maximum, the displayed color is green, when the temperature reserve value is minimum or close to minimum, the displayed color is red, for decreasing temperature reserve values from maximum, the color may change starting from green, to yellow, to orange to finally red. The number of steps, specific color sequence or pattern are non-limiting to the present teachings. For example, a color scale shifting based on visual spectrum can also be contemplated. In such a case, the maximum temperature reserve value may start off by blue and the lowest at red, with visual spectrum color sequence in between. For example, a large temperature reserve value, meaning that the electrical unit is still comparably cold, can be converted into a blue color. A small temperature reserve value, meaning that the electrical unit is close to an overtemperature trip, can be converted into a red color. The temperature reserve values in between can for example be converted from blue to yellow, to orange to red.

It shall be appreciated that the color scale as proposed can be an intuitive conversion of the determined temperature reserve value into an easily interpretable user information.

In some embodiments, the temperature reserve value and the color scale may have a predetermined correlation (e.g., mapping), based on which the color is adapted. For example, the temperature reserve value range (e.g., values of the temperature reserve value from maximum to minimum) may be mapped to a frequency range of the colors of the human visual spectrum. It may also be possible to map the temperature reserve value range to a range of a color model (e.g., RGB, CMY, CMYK, HSL, HSV, or any other color models or their combinations) This can help the user to easily gain information about the temperature reserve value without be required to read any numerical values while using the electrical unit. Often times, the user may be working far away from the unit to be able to comfortably read numerical values. The proposed HMI scheme can allow the user to be more easily informed of the state of the unit even when located away from the unit. Hence, irrespective of the location, the user can act to prevent an unintended thermal shutdown of the unit caused by overtemperature. It shall be appreciated that the above aspects can even be implemented by a backlit display (e.g., color LCD, LED, OLED, or similar displays or their combinations).

In some non-limiting embodiments, the HMI unit may be configured to output a state of charge (SOC) value of at least one electrical energy storage cell. This can be done in combination to displaying the temperature reserve value. This can even be done by overlaying the two values (SOC and temperature reserve) on the same display, e.g., in different colors and/or in an interleaved or multiplexed manner. Advantageously, no further, separate HMI or further display unit may need to be added. Also, from a user experience point of view may be favorable to have all relevant information at a glance. The electrical unit can also be kept compact and more economical.

In some non-limiting embodiments, the state of charge may be displayed by multiple light emitting components (e.g., LEDs or lamps) which are arranged in a certain pattern (e.g., row, column, array, or such). From these multiple lighting components, the number of components which are in a lighted state may indicate the SOC. E.g., a larger number of lighted light emitting components can correspond to a higher SOC. Upon, or onto, these lighted light emitting components color information can be overlayed (e.g., by changing their color(s)) dependent upon the temperature reserve value.

In addition, or as an alternative, the HMI unit may comprise an annunciator (e.g., buzzer, speaker, or their likes). The annunciator may indicate the temperature reserve value e.g., by outputting a tone, or a series of tones and/or beeps with a frequency dependent on temperature reserve value.

The present teachings also relate to a method for operating a temperature monitoring system for an electrical unit, e.g., an overtemperature system, described above, wherein a first temperature of a first monitored portion is measured and a second temperature of a second monitored portion is measured and a temperature reserve value is determined from the first temperature and the second temperature. For the advantages of this method, it is referred to the description above. According to an aspect, the temperature reserve value may be calculated based on the formula or parameters (e.g., R) discussed herein.

As it was discussed, the temperature reserve value may be calculated continuously, or it may be calculated or recalculated intermittently with equal or unequal time intervals. In some aspects, the time interval may be dependent on a state or operating more of the electrical unit. For example, when a high load is connected at the electrical unit, the electrical unit may heat up faster as compared to low load conditions. In such cases, the temperature readout rate may be adapted for any one or more monitored portions. Alternatively, or in addition, the measurement rate or frequency may be adapted based on ambient conditions (e.g., temperature). As a few non-limiting examples, the temperature reserve value may be calculated every 1 ms, or 10 ms, or 50 ms, or 100 ms, every 1 s, every few seconds, every 10s, or every 20 s. The interval may be fixed, or it may be variable. The temperature reserve value may be updated regularly as and when more recent temperature measurement for either one or both of the monitored portions is available.

As discussed in context of the system aspects, the determined temperature reserve value may be indicated via an HMI and preferably visualized on a display unit. The temperature reserve value may be mapped onto a color scale and/or displayed as a color. The relationship between the temperature reserve and the colors may be linear.

The temperature reserve value and a state of charge of the electrical unit may be displayed together on the display unit.

In addition, or as an alternative, a warning signal may be issued, in case the temperature reserve is lower than a threshold temperature reserve value. This warning signal can be a visual warning and/or an audible warning.

As discussed in context with the system aspects, the temperature reserve value may be manipulated by controlling (or setting) one or more parameters (e.g., the load current or power) of an appliance coupled to the AC output of the electrical unit.

Certain embodiments and details are now described in conjunction with the following figures which present non-limiting examples of the present teachings. Shown on:

Fig. 1    is a schematic representation of a temperature monitoring system,

Fig. 2    is a flow chart of a method to operate a temperature monitoring system, and

Fig. 3    is a diagram of a temperature reserve value of a first monitored portion and a temperature reserve value of a second monitored portion over time in dependence of a load current.

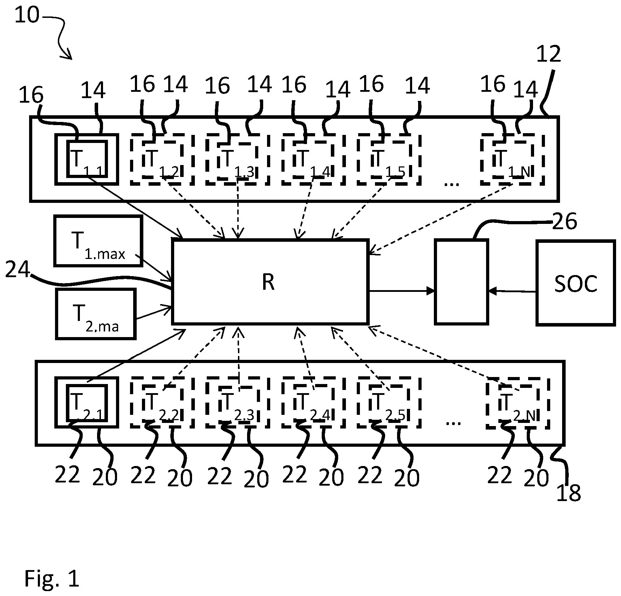

Fig. 1 is a schematic representation of a temperature monitoring system 10 for an electrical unit, discussed in this non-limiting example as an overtemperature monitoring system. The overtemperature monitoring system 10 comprises a first monitored portion 12, comprising a certain number N electrical energy storage cells 14. The number N may be 1 or higher. A first temperature sensor 16 is assigned to each of the multiple electrical energy storage cells 14. Each of the first temperature sensors 16 is capable to measure their corresponding first temperatures $T_{1,1}$ to $T_{1,N}$ of the respective 1 to N electrical energy storage cells 14. The energy storage cells 14 from number 2 to N and their respective first temperature sensors 16 shown in dotted lines are optional.

The overtemperature monitoring system 10 further comprises a second monitored portion 18, comprising a certain number N of substrates, such as PCBs 20. The number N may be 1 or higher. In this example, the second monitored portion 18 comprises equal number (N) of components and temperature sensors 22 as the first monitored portion 12, however these numbers may even be unequal between any two monitored portions. A second temperature sensor 22 is assigned to each of the multiple PCBs 20 to measure their corresponding second temperatures $T_{2,1}$ to $T_{2,N}$ of the respective 1 to N PCBs 20. The PCBs 20 from number 2 to N and their respective second temperature sensors 22 shown in dotted lines are optional.

The overtemperature monitoring system 10 further comprises an evaluation unit 24. The measured first temperatures $T_{1,1}$ to $T_{1,N}$ and the measured second temperatures $T_{2,1}$ to $T_{2,N}$ are provided to the evaluation unit 24. Further a first maximum threshold value $T_{1,max}$ for the first monitored portion 12 and a second maximum threshold value $T_{2,max}$ for the second monitored portion 18 are provided at the evaluation unit 24.

The evaluation unit 24 is capable of determining a temperature reserve value R from these values. The evaluation unit 24 is connected to an HMI unit 26, where the temperature reserve value R is displayed, e.g., via a color code. Further the SOC of the multiple electrical energy storage cells 14 may serve as an input to the HMI unit 26 and may be displayed together with the temperature reserve value R.

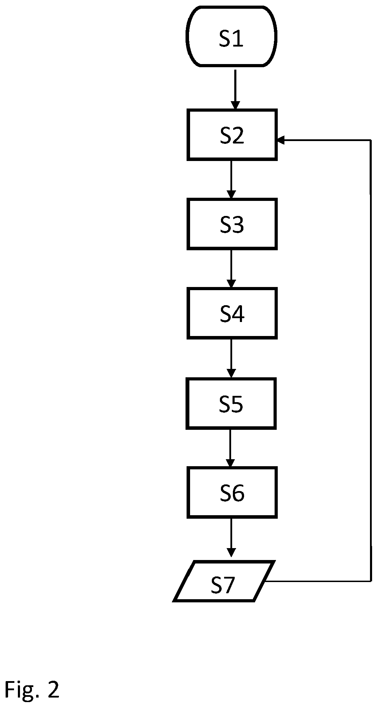

Fig. 2 depicts a flow chart of a method to operate an overtemperature monitoring system 10.

In step S1 the method starts and in step S2 multiple first temperatures $T_{1,1}$ to $T_{1,N}$ of the electrical energy storage cells 14 are measured by the respective first temperature sensors 16 and provided to the evaluation unit 24.

In step S2, the first maximum threshold temperature $T_{1,max}$ of the electrical energy storage cells 14 is determined, depending on the mode of operation of the electrical energy storage cells 14.

Further in step S3, multiple second temperatures $T_{2,1}$ to $T_{2,N}$ of the multiple PCBs 20 are measured by the second temperature sensors 22 and transmitted to the evaluation unit 24.

In step S4, the second maximum threshold temperature $T_{2,max}$ of the PCBs 20 is transmitted to the evaluation unit 24.

In step S5, the evaluation unit 24 determines among $T_{1,1}$ to $T_{1,N}$ the highest first temperature $T_{1,highest}$ and among $T_{2,1}$ to $T_{2,N}$ the highest second temperature $T_{2,highest}$.

In step S6 the evaluation unit 24 determines the temperature reserve value R according to the following formula:

$$R = \min(a,b)$$

whereas

$a = (T_{1,max} - T_{1,highest})$
$b = (T_{2,max} - T_{2,highest})$.

The formula and other aspects were discussed in more detail in the present disclosure, any of which can be implemented in this method.

In Step S7 the temperature reserve value R may be indicated on the HMI 26. Then, the method may start again in step S2.

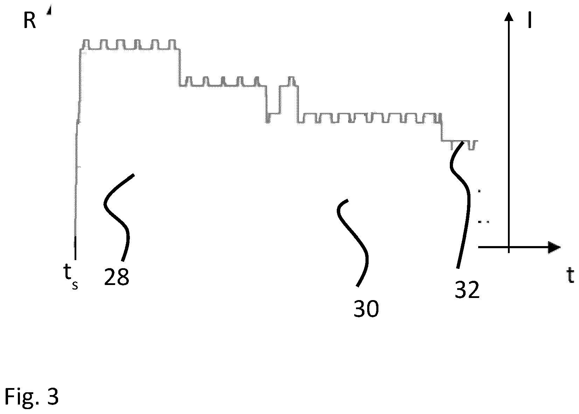

Fig. 3 shows a diagram, in which x-axis represents time (t) while y-axis on the left hand side of the diagram represents temperature reserve value (R), and y-axis on the right hand side of the diagram represents load current (I). The temperature reserve value 28 for the first monitored portion 12, comprising at least one electrical energy storage cell 14, is depicted over time. Further, the diagram shows the temperature reserve value 30 for the second monitored portion 18, comprising at least one PCB 20, over time. A smaller temperature reserve value 28, 30 is indicative of that the respective monitored portion 12, 18 has heated up and that a switch-off of the electrical unit is imminent.

In this non-limiting example, the temperature reserve value 28 for the first monitored portion 12 and the temperature reserve value 30 of the second monitored portion 18 are evaluated separately and their evolution over time is shown as separate curves. The temperature reserve value of the electrical unit at any given time would be that value which at that time is as the lower value of the curves 28 and 30.

As can be seen, for times earlier than $t_s$, the temperature reserve value 28 of the first monitored portion 12 (e.g., energy storage cell 14) is lower than the temperature reserve value 30 of the second monitored portion 18 (e.g., PCB 20). It may be the case that a maximum threshold temperature for more sensitive components, e.g., the first monitored portion 12, may be set to a lower value than for the second monitored portion 18. Thus, in this example this results in a lower temperature reserve value 28 for the first monitored portion 12 (energy storage cells 14) as compared to the temperature reserve value 30 for the second monitored portion 18 (PCB 20) until time $t_s$. At the start (e.g., when the components of the electrical unit are in thermal equilibrium) of the electrical unit all components, such as at least one electrical energy storage cell 14 and at least one PCB 20, will have the same temperature.

At $t = t_s$, an appliance is started to being powered by the electrical unit and a load current 32 increases to a non-zero value. During operation of the electrical unit, the PCB 20 heats up faster, e.g., due to a large currents flowing through the PCB and/or due to lower thermal mass as compared to the thermal mass of the electrical energy storage cell 14. The temperature reserve value 30 of the PCB 20 rapidly becomes smaller than the temperature reserve value 28 of the electrical energy storage cell 14. This can be a significant advantage of the present teachings that such dynamic behavior of various portions (or parts) of the electrical unit can be taken into account for specifying a safe operation.

In order to improve the temperature reserve value of the electrical unit (e.g., the temperature reserve values 28, 30 of either the first monitored portion 12 or the second monitored portion 18), the load current 32 can be used as one of the parameters which can be manipulated.

In this example, as the load current 32 is reduced stepwise, the PCB 20 cools down and the temperature reserve value 30 of the PCB 20 rises above the temperature reserve value 28 of the at least one energy storage cell 14. There is a weak but relevant thermal coupling between the electrical energy storage cell 14 and PCB 18, leading at least for reduced load current 32, to a regime, where the at least one electrical energy storage cell 14 with their comparably larger thermal mass define the overall system temperature and also the resulting temperature reserve value.

In the example of Fig. 3, the load current 32 is adjusted according to the temperature reserve value in a multi-level hysteretic manner. The evaluation unit 24 evaluates in regular intervals, whether the temperature reserve value is larger than a first predetermined temperature reserve value, if yes, then the load current 32 is set to a first preselected load current value, if not, the evaluation unit evaluates, whether the temperature reserve value is larger than a second predetermined value being smaller than the first predetermined temperature reserve value. If yes, then the load current 32 is set to a second preselected load current value being lower than the first preselected load current value, if not, the evaluation unit evaluates, whether the temperature reserve value is larger than a third predetermined value. This process is continued, until either the temperature reserve value is larger than a predetermined temperature reserve value or until a minimum predetermined temperature reserve value is reached and then the load current 32 is set to a preselected minimum value.

The present teachings also disclose a system (e.g., a temperature monitoring system) comprising means to perform the steps of herein disclosed methods.

The present teachings also disclose a software product comprising instructions, which when executed by a suitable system (e.g., a system comprising suitable means, such as a temperature monitoring system) cause the system to perform the steps of herein disclosed methods.

### List of reference signs

| 10 | overtemperature monitoring system |
|----|-----------------------------------|
| 12 | first monitored portion |
| 14 | electrical energy storage cell |
| 16 | first temperature sensor |
| 18 | second monitored portion |
| 20 | PCB |
| 22 | second temperature sensor |
| 24 | evaluation unit |
| 26 | HMI |

28 temperature reserve value of first monitored portion

30 temperature reserve value of second monitored portion

32 load current

Although embodiments or aspects have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect. Aspects which might have been discussed in this disclosure with reference to product category are also combinable with method category and vice-versa.

For purposes of the description, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. The terms "first," "second," or "third" and their likes have been used to establish a reference to the corresponding feature. For the purposes of scope of the present teachings, saying "first" or "second" does not mean that a particular feature must be attached with a particular sequence or order to be valid. It is also to be understood that the specific devices and processes illustrated in the attached drawings, and described in the following specification, are simply examples and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

## Claims

1. A temperature monitoring system for an electrical unit, which temperature monitoring system comprises:

   - a first monitored portion and a first temperature sensor disposed to measure a first temperature of the first monitored portion;
   - a second monitored portion and a second temperature sensor disposed to measure a second temperature of the second monitored portion;
   - an evaluation unit operable to determine a temperature reserve value from the first temperature and the second temperature.

2. Temperature monitoring system according to the preceding claim, wherein the first monitored portion comprises at least one electrical energy storage cell.

3. Temperature monitoring system according to any of the preceding claims, wherein the second monitored portion comprises at least one substrate such as a printed circuit board.

4. Temperature monitoring system according to any of the preceding claims, wherein the evaluation unit is operable to compare the first temperature to a first monitoring criteria, and the second temperature to a second monitoring criteria, the first monitoring criteria and the second monitoring criteria being different.

5. Temperature monitoring system according to any of the preceding claims, wherein the evaluation unit determines the temperature reserve value (R) according to following formula:

$$R = \min(a,b)$$

wherein

$a = x(T_{1,max} - T_{1,highest})$
$b = y(T_{2,max} - T_{2,highest})$
$T_{1,max}$ = the maximum threshold temperature of the first monitored portion
$T_{1,highest}$ = the highest measured first temperature of the first monitored portion

$T_{2,max}$ = the maximum threshold temperature of the second monitored portion

$T_{2,highest}$ = the highest measured second temperature of the second monitored portion

x,y = weighting factors.

6. Temperature monitoring system according to the preceding claim, wherein the first monitored portion is an electrical energy storage cell and $T_{1,max}$ is dependent on a mode of operation of the at least one electrical energy storage cell and/or a mode of operation of the electrical unit.

7. Temperature monitoring system according to any of the preceding claims further comprising an HMI unit operable to output the temperature reserve value.

8. Temperature monitoring system according to the preceding claim, wherein the HMI unit comprises at least one light emitting element operable to display the temperature reserve value along a color scale or model.

9. Temperature monitoring system according to any one of the preceding claims 7 to 8, wherein the HMI unit is operable to output both, a state of charge (SOC) of at least one electrical energy storage cell, and the temperature reserve value.

10. Method for operating a temperature monitoring system for an electrical unit, wherein a first temperature of a first monitored portion is measured and a second temperature of a second monitored portion is measured and a temperature reserve value is determined from the first temperature and the second temperature.

11. Method according to the preceding claim, wherein the temperature reserve value (R) is calculated according to following formula:

$$R = min(a,b)$$

wherein

$a = x(T_{1,max} - T_{1,highest})$
$b = y(T_{2,max} - T_{2,highest})$
$T_{1,max}$ = the maximum threshold temperature of the first monitored portion
$T_{1,highest}$ = the highest measured first temperature of the first monitored portion
$T_{2,max}$ = the maximum threshold temperature of the second monitored portion
$T_{2,highest}$ = the highest measured second temperature of the second monitored portion
x,y = weighting factors.

12. Method according to any of the preceding claims, wherein the calculated temperature reserve value is outputted on an HMI unit.

13. Method according to any of the preceding claims, wherein the calculated temperature reserve value is mapped onto a color scale and displayed as a color.

14. Method according to the preceding claim, wherein the temperature reserve value and a state of charge of at least one electrical energy storage cell are displayed together in a single display unit.

15. A computer software product comprising instructions which when executed by a suitable processor of an electrical unit cause the processor to perform the steps of the above method claims.

Fig. 1

Fig. 2

Fig. 3

Europäisches
Patentamt

European
Patent Office

Office européen
des brevets

# EUROPEAN SEARCH REPORT

**Application Number**

EP 24 16 6516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/183261 A1 (KWAK WOONGEUN [KR] ET AL) 28 June 2018 (2018-06-28) * paragraphs [0006], [0081], [0082], [0124] * ----- | 1-15 | INV. G01K1/02 G01K3/00 G01K7/42 H01M10/48 H01M10/651 |
| X | US 2017/025868 A1 (GRAVETT JOHN RUSSELL [US] ET AL) 26 January 2017 (2017-01-26) * paragraphs [0003], [0013] * ----- | 1-15 | |
| X | JP 2004 242459 A (SONY CORP) 26 August 2004 (2004-08-26) * the whole document * ----- | 1,2,4-15 | |

**TECHNICAL FIELDS SEARCHED (IPC)**

H01M

The present search report has been drawn up for all claims

| Place of search | Date of completion of the search | Examiner |
|---|---|---|
| The Hague | 5 June 2024 | Goethals, Filip |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 6516

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2024

| Patent document cited in search report | Publication date | Patent family member(s) | | Publication date |
|---|---|---|---|---|
| US 2018183261 A1 | 28-06-2018 | CN | 108242837 A | 03-07-2018 |
| | | EP | 3340424 A1 | 27-06-2018 |
| | | KR | 20180074050 A | 03-07-2018 |
| | | US | 2018183261 A1 | 28-06-2018 |
| US 2017025868 A1 | 26-01-2017 | NONE | | |
| JP 2004242459 A | 26-08-2004 | NONE | | |

EPO FORM P0459

For more details about this annex : see Official Journal of the European Patent Office, No. 12/82